# EUROPÄISCHE PATENTSCHRIFT

(11) **EP 0 934 233 B1**
(45) Veröffentlichungstag und Bekanntmachung des Hinweises auf die Patenterteilung: **07.06.2000**
(21) Anmeldenummer: 97946757.8
(22) Anmeldetag: 23.10.1997
(51) Int. Cl.: C04B 30/02, C04B 28/26, H05B 3/74

(54) **WÄRMEDÄMMENDER FORMKÖRPER UND VERFAHREN ZU SEINER HERSTELLUNG**
HEAT INSULATING MOULDED BODY AND PROCESS FOR PRODUCING THE SAME
CORPS MOULE CALORIFUGE ET SON PROCEDE DE FABRICATION

(30) Priorität: 24.10.1996 DE 19644282
(43) Veröffentlichungstag der Anmeldung: 11.08.1999
(73) Patentinhaber: Wacker-Chemie GmbH, 81737 München (DE)
(72) Erfinder: EYHORN, Thomas, D-87452 Altusried (DE); KRATEL, Günter, D-87471 Durach (DE); KLAUS, Johann, D-87477 Sulzberg (DE); KICHERER, Robert, 75038 Oberderdingen (DE); WILDE, Eugen, 75438 Knittlingen (DE); MIKSCHL, Bernhard, 75056 Sulzfeld (DE)
(74) Vertreter: Rimböck, Karl-Heinz, Dr.
(86) Internationale Anmeldenummer: EP9705853
(87) Internationale Veröffentlichungsnummer: WO9817596

(56) Entgegenhaltungen:
- EP-A- 0 204 185
- EP-A- 0 562 554
- EP-A- 0 644 707
- DE-A- 19 506 411
- DE-A- 19 540 316

## Beschreibung

Gegenstand der Erfindung ist ein wärmedämmender Formkörper aus anorganischem Material und anorganischen Verstärkungsfasern und ein Verfahren zur Herstellung des Formkörpers. Gegenstand der Erfindung ist insbesondere ein wärmedämmender Formkörper, der sich als Distanzelement in Strahlungsheizkörpern für Kochherde und Backöfen eignet.

An ein derartiges Element werden besonders hohe Anforderungen gestellt:
- es muß in hohem Maße mechanisch stabil und dennoch ausreichend elastisch sein, um unbeschadet den automatisierten Einbau in einen Strahlungsheizkörper zu überstehen, und, um dauerhaft gegen die Unterseite eines keramischen Kochfelds gedrückt werden zu können;
- es darf keine gesundheitsschädlichen Stoffe, wie beispielsweise lungengängige Faserteile absondern;
- es darf nicht die Quelle von Stoffen sein, die die Funktion oder die Lebensdauer von Gegenständen, wie beispielsweise Heizbändern oder Heizspiralen herabsetzen, sobald diese Gegenstände mit diesen Stoffen in Berührung kommen;
- es muß besonders effizient Wärme dämmen, so daß die vom Heizkörper erzeugte Wärme ohne große Verluste zum Kochen oder Backen genutzt werden kann;
- es muß ein elektrischer Isolator sein;
- es muß seine mechanischen und physikalischen Eigenschaften über einen großen Temperaturbereich beibehalten.

In der EP-204 185 A1 ist eine Strahlungs-Heizeinheit mit einem als Topfrand bezeichneten Formkörper beschrieben, der auch als Distanzelement verwendet wird. Der Topfrand besteht im wesentlichen aus einer Körnung aus mit einem Bindemittel verpreßtem Blähglimmer, wie Vermiculit. Dieses Material erfüllt das Kriterium einer ausreichenden mechanischen Stabilität. Seine wärmedämmenden Eigenschaften genügen zumindest den heute geltenden Ansprüchen nicht mehr.

In der EP-560 479 B1 ist ein ringförmiger, wärmedämmender Formkörper und seine Verwendung als Distanzelement beschrieben. Der Formkörper besteht aus einer innigen Mischung von mikroporösem Material und bestimmten, verstärkenden Glasfasern, wie E-Glasfasern. Dieser Formkörper erfüllt insbesondere die Anforderungen in bezug auf die Wärmedämmung. Allerdings ist seine mechanische Stabilität deutlich geringer, als die eines vergleichbaren Formkörpers aus mit Bindemittel verpreßtem Vermiculit. Versuche mit dem glasfaserverstärkten Formkörper haben außerdem ergeben, daß bei seiner Verwendung die Lebensdauer von in Strahlungsheizkörpern eingesetzten Heizbändern oder Heizspiralen herabgesetzt ist. Es wurde festgestellt, daß die teilweise sehr dünnen Heizbänder oder Heizspiralen verhältnismäßig rasch an Stellen korrodieren und durchbrennen, an denen sich vom Formkörper stammender Abrieb niedergeschlagen hatte. Derartiger Abrieb ist nicht zu vermeiden, da er beispielsweise beim Einbau des Formkörpers in die Strahlungsheizung, beim Transport der Strahlungsheizung und beim Bohren von Löchern in die Wärmeisolation der Strahlungsheizung entsteht.

Die Erfindung betrifft einen Formkörper, der in bezug auf die eingangs genannten Anforderungen besonders geeignet ist.

Gegenstand der Erfindung ist ein wärmedämmender Formkörper aus anorganischem Material und anorganischen Verstärkungsfasern, der durch folgende, gewichtsbezogene Zusammensetzung gekennzeichnet ist:
a) 30-70 % geblähter Vermiculit
b) 15-40 % anorganischer Binder
c) 0-20 % Infrarottrübungsmittel
d) 15-50 % mikroporöses Material
e) 0,5-8 % Verstärkungsfasern, die höchstens 2 % B₂O₃ und höchstens 2 % Alkalimetalloxide, bezogen auf das Gewicht der Verstärkungsfasern, enthalten.

Der Formkörper erfüllt alle der eingangs genannten Anforderungen in überdurchschnittlicher Weise. Er eignet sich daher bestens zur Verwendung als Distanzelement in Strahlungsheizkörpern von Herden und Backöfen. Besonders hervorzuheben ist seine ausgezeichnete mechanische Festigkeit und Flexibilität und die Tatsache, daß seine Bestandteile die Lebensdauer von Heizbändern oder Heizspiralen nicht herabsetzt. Die letztgenannte Eigenschaft ist in erster Linie mit der Auswahl der Verstärkungsfasern verknüpft. Anders als beispielsweise E-Glasfasern, greifen die ausgewählten Verstärkungsfasern betriebsheiße Heizbänder oder Heizspiralen nicht an. E-Glas enthält gemäß Herstellerangaben folgende Hauptbestandteile (Angaben in Gew.-%):

| | | |
|---|---|---|
| SiO₂: 52-56 % | Al₂O₃: 12-16 % | B₂O₃: 5-10 % |
| CaO: 16-25 % | MgO: 0-5 % | ZnO: -------- |
| TiO₂: 0-1,5 % | Na₂O+K₂O: 0-2 % | |

Der Formkörper enthält verschiedene Bestandteile, die sich zu 100 Gewichtsteilen addieren. 30-70 Gewichtsteile bestehen aus geblähtem Vermiculit. Vorzugsweise werden Vermiculitsorten mit einer Körnung von 0-2 verwendet, so daß der Durchmesser der Vermiculitkörner im Formkörper typischerweise 0,2 bis 5 mm ist. Gegebenenfalls werden Vermiculitkörner, die bestimmte Grenzgrößen über- oder unterschreiten, oder Fremdstoffe vor der Herstellung des Formkörpers durch Sieben oder Sichten entfernt. Magnetische Fremdstoffe, beispielsweise eisenhaltige Beimengungen können auch mit einen Magnetabscheider abgetrennt werden.

Weiterhin enthält der Formkörper 15-40 Gewichtsteile eines anorganischen Binders. Bevorzugt sind Wassergläser, Kieselsole, wässerige Phosphatbinder und artverwandte Binder. Besonders geeignet ist ein Kaliwasserglas der Spezifikation K28 der Firma Silbermann, Gablingen, Deutschland.

Optional kann der Formkörper auch bis zu 20 Gewichtsteile eines Infrarottrübungsmittels enthalten. Geeignete Trübungsmittel sind Ilmenit, Rutil, Titandioxid, Siliciumcarbid, Eisen(II)Eisen(III)-Mischoxide, Chromdioxid, Zirkonoxid, Mangandioxid, Eisenoxid und Zirkonsilikat, sowie deren Mischungen. Besonders bevorzugt kommen Ilmenit, Rutil und Zirkonsilikat zur Anwendung.

Der Formkörper enthält ferner 15-50 Gewichtsteile eines mikroporösen Materials. Bevorzugt sind Oxide mit spezifischen Oberflächen nach BET von vorzugsweise 50-700 m²/g, insbesondere pyrogen erzeugte Kieselsäuren, einschließlich Lichtbogenkieselsäuren, alkaliarme Fällungskieselsäuren, Siliciumdioxidaerogele und Aluminiumoxide sowie Mischungen der genannten Stoffe. Besonders bevorzugt sind pyrogen erzeugte Kieselsäuren oder gefällte Kieselsäuren oder deren Mischungen.

Der Formkörper enthält auch 0,5-8 Gewichtsteile von Verstärkungsfasern, die, bezogen auf das Fasergewicht, höchstens 2% B₂O₃ und höchstens 2% Alkalimetalloxide enthalten. Bevorzugt sind Fasern aus Silica, Quarzglas, R-Glas, S2-Glass®, ECRGLAS® und artverwandten Gläsern, und beliebige Mischungen dieser Fasern. Der Faserdurchmesser beträgt vorzugsweise 3-20 µm und die Faserlänge vorzugsweise 1-25 mm. Nach Herstellerangaben enthalten R-Glas, S2-Glass® und ECRGLAS® folgende Hauptbestandteile (Angaben in Gew.-%):

| | R-Glas | S2-Glass® | ECRGLAS® |
|---|---|---|---|
| SiO₂ | 55-65 % | 64-66 % | 54-62 % |
| Al₂O₃ | 15-30 % | 24-25 % | 9-15 % |
| B₂O₃ | -------- | -------- | -------- |
| CaO | 9-25 % | 0-0,1 % | 17-25 % |
| MgO | 3-8 % | 9,5-10 % | 0-4 % |
| ZnO | -------- | -------- | 2-5 % |
| TiO₂ | -------- | -------- | 0-4 % |
| Na₂O+K₂O | 0-1 % | 0-0,2 % | 0-2 % |

Der Herstellung des Formkörpers fällt eine besondere Bedeutung zu, weil mikroporöses Material bei Kontakt mit Wasser schnell seine wärmedämmenden Eigenschaften einbüßt.

Gegenstand der Erfindung ist daher auch ein Verfahren zur Herstellung eines wärmedämmenden Formkörpers aus anorganischem Material und anorganischen Verstärkungsfasern, das durch die folgende Abfolge von Verfahrensschritten gekennzeichnet ist:
a) Mischen von 30-70 Gewichtsteilen von geblähtem Vermiculit mit 15-40 Gewichtsteilen eines anorganischen Binders zu einer rieselfähigen Vormischung,
b) Hinzumischen von 15-50 Gewichtsteilen von mikroporösem Material, von 0,5-8 Gewichtsteilen von Verstärkungsfasern und gegebenenfalls von bis zu 20 Gewichtsteilen von Infrarottrübungsmittel zur gemäß a) bereiteten Vormischung, wobei die Verstärkungsfasern, bezogen auf ihr Eigengewicht, höchstens 2 % B₂O₃ und höchstens 2 % Alkalimetalloxide enthalten, und eine Endmischung erhalten wird, in der sich die vermischten Bestandteile zu 100 Gewichtsteilen addieren,
c) Verpressen der Endmischung zu einem wärmedämmenden Formkörper, und
d) Härten und Trocknen des Formkörpers bei Temperaturen bis 1000 °C.

Der Wasser enthaltende anorganische Binder wird beim Vormischen mit Vermiculit von letzterem aufgesogen, so daß die Vormischung noch rieselfähig bleibt und sich wie eine trockene Mischung verhält. Das wasserempfindliche mikroporöse Material, das erst zur Vormischung hinzugemischt wird, behält seine wärmedämmenden Eigenschaften. Beim Verpressen der Endmischung tritt Wasserglas aus dem Vermiculitkorn aus und verklebt die Vermiculitkörner im Bereich ihrer Korngrenzen mit den anderen Bestandteilen der Endmischung. Auch bei diesem Vorgang bleibt die wärmedämmende Wirkung des mikroporösen Materials nahezu vollständig erhalten.

Die nachstehenden Beispiele/Vergleichsbeispiele verdeutlichen die Vorteile der Erfindung.

### Vergleichsbeispiel 1)

Es wurde eine Mischung aus
46 Gew.-% geblähtem Vermiculit der Körnung "0" spezial, bezogen von der Firma Kramer Progetha, Düsseldorf, Deutschland,
24 Gew.-% Wasserglas "K28", bezogen von der Firma Silbermann, Gablingen, Deutschland,
26 Gew.-% pyrogene Kieselsäure "N25", bezogen von der Wacker-Chemie GmbH, München, Deutschland, und
4 Gew.-% Verstärkungsfasern aus E-Glas (Länge 6 mm), bezogen von der Firma STW, Schenkenzell, Deutschland,
wie im beanspruchten Verfahren beschrieben, hergestellt und zu einem Ring mit einer Dichte von ca. 700 kg/m³ axial verpreßt und bei einer Temperatur von 500 °C getrocknet. Der Ring wurde anschließend zu feinem Staub zermahlen. Daraufhin wurden geringe Mengen des Staubes in einen Strahlungsheizkörper mit einem dünnen Heizband, welches eine Aufglühzeit von 3-6 Sekunden aufwies, gestreut. Abschließend wurde der Strahlungsheizkörper einem Dauertest unterzogen und festgestellt, daß nach ca. 800 h Betriebsdauer erste Korrosionserscheinungen auf dem Heizband erkennbar waren, die nach weiteren 1000 h Betriebsdauer zum Ausfall des Heizbandes führten.

### Beispiel 2)

In einem weiteren Versuch waren als Verstärkungsfasern S2-Glass®-Fasern (Länge 6 mm), bezogen von der Firma Owens Corning, Wiesbaden, Deutschland, zur Herstellung eines Distanzringes verwendet worden. Ansonsten waren die Versuchsbedingungen im Vergleich zu denen des Vergleichsbeispiels 1) nicht verändert worden. In diesem Fall konnte jedoch keine Korrosion auf dem Heizband des Strahlungsheizkörpers festgestellt werden.

### Vergleichsbeispiel 3a)

In einen Strahlungheizkörper (typgleich mit dem vom Vergleichsbeispiel 1) wurden E-Glasfasern (ebenfalls typgleich mit denen des Vergleichsbeispiels 1) eingestreut. Nach einer Betriebsdauer von 280 h war das Heizband so stark durch verschmolzenes, es benetzendes Glas angegriffen, daß es an einer von Glas benetzten Stelle durchbrannte.

### Vergleichsbeispiel 3b)

In einem gleichgestalteten Versuch wie im Vergleichsbeispiel 3a) führte das Einstreuen von C-Glas, bezogen von der Firma Schuller, Wertheim, Deutschland, zur Zerstörung des Heizbandes nach einer Betriebsdauer von 145 h.

C-Glas enthält gemäß Herstellerangaben folgende Hauptbestandteile (Angaben in Gew.-%):

| | | |
|---|---|---|
| SiO₂: 64-68 % | Al₂O₃: 3-5 % | B₂O₃: 4-6 % |
| CaO: 11-15 % | MgO: 2-4 % | ZnO: -------- |
| TiO₂: -------- | ZrO₂: -------- | Na₂O+K₂O: 7-10 % |

### Vergleichsbeispiel 3c)

In einem gleichgestalteten Versuch wie im Vergleichsbeispiel 3a) fiel das Heizband bereits nach 35 h Betriebsdauer aus. Anstelle der E-Glasfasern des Vergleichsbeispiels 3a) waren Fasern aus AR-Glas, bezogen unter dem Handelsnamen "Cemfill" von der Firma STW, Schenkenzell, Deutschland, getestet worden. AR-Glas enthält gemäß Herstellerangaben folgende Hauptbestandteile (Angaben in Gew.-%):

| | | |
|---|---|---|
| SiO₂: 55-75 % | Al₂O₃: 0-5 % | B₂O₃: 0-8 % |
| CaO: 1-10 % | MgO: -------- | ZnO: -------- |
| TiO₂: 0-12 % | ZrO₂: 1-18 % | Na₂O+K₂O: 11-21 % |

### Beispiel 4a)

In einem gleichgestalteten Versuch wie im Vergleichsbeispiel 3a) wurden S2-Glass®-Fasern (Länge 6 mm), bezogen von der Firma Owens Corning, Wiesbaden, Deutschland, anstelle von E-Glasfasern in einen Strahlungsheizkörper eingestreut. Nach 1500 h Betriebsdauer war das Heizband vom Glas weder benetzt, noch korrodiert worden.

### Beispiel 4b)

In einem gleichgestalteten Versuch wie im Vergleichsbeispiel 3a) wurden R-Glasfasern (Länge 6 mm), bezogen von der Firma Vetrotex, Herzogenrath, Deutschland, anstelle von E-Glasfasern in einen Strahlungsheizkörper eingestreut. Nach 1500 h Betriebsdauer war das Heizband vom Glas weder benetzt, noch korrodiert worden.

### Beispiel 4c)

In einem gleichgestalteten Versuch wie im Vergleichsbeispiel 3a) wurden Silicafasern (Länge 6 mm), bezogen unter dem Handelsnamen "Asilfaser" von der Firma Asglawo, Freiberg, Deutschland, anstelle von E-Glasfasern in einen Strahlungsheizkörper eingestreut. Nach 1500 h Betriebsdauer war das Heizband vom Glas weder benetzt, noch korrodiert worden. Die verwendeten Silicafasern bestanden gemäß Herstellerangabe zu 98% aus SiO₂.

### Vergleichsbeispiel 5a)

In Anlehnung an die EP-204185 A1 wurde ein Distanzring durch Verpressen von Vermiculit und Wasserglas hergestellt und dessen Biegefestigkeit und Wärmeleitfähigkeit untersucht.

### Vergleichsbeispiel 5b)

In Anlehnung an die EP-560479 B1 wurde ein Distanzring durch Verpressen von mikroporösem Material und E-Glasfasern hergestellt und dessen Biegefestigkeit und Wärmeleitfähigkeit untersucht.

### Beispiel 6)

Biegefestigkeit und Wärmeleitfähigkeit eines erfindungsgemäßen Distanzringes, dessen Herstellung aus Beispiel 2) hervorgeht, wurde ebenfalls untersucht.

Das Ergebnis der Untersuchungen gemäß der Vergleichsbeispiele 5a) und 5b) und des Beispiels 6) ist nachstehend zusammengfaßt (BT bedeutet Biegefestigkeit, W-RT bedeutet Wärmeleitfähigkeit bei Raumtemperatur):

| | BT (N/mm²) | W-RT (W/mK) |
|---|---|---|
| Vergleichsbeispiel 5a) | ca. 2 | ca. 0,2 |
| Vergleichsbeispiel 5b) | ca. 0,2 | ca. 0,03 |
| Beispiel 6) | ca. 0,8 | ca. 0,06 |

## Patentansprüche

1. Wärmedämmender Formkörper aus anorganischem Material und anorganischen Verstärkungsfasern, gekennzeichnet durch folgende, gewichtsbezogene Zusammensetzung:
a) 30-70 % geblähter Vermiculit
b) 15-40 % anorganischer Binder
c) 0-20 % Infrarottrübungsmittel
d) 15-50 % mikroporöses Material
e) 0,5-8 % Verstärkungsfasern, die höchstens 2 % B₂O₃ und höchstens 2 % Alkalimetalloxide, bezogen auf das Gewicht der Verstärkungsfasern, enthalten.

2. Formkörper nach Anspruch 1, dadurch gekennzeichnet, daß die Verstärkungsfasern aus einer Gruppe ausgewählt sind, die Fasern aus Silica, Quarzglas, R-Glas, S2-Glass®, ECRGLAS® und beliebige Mischungen dieser Fasern umfaßt.

3. Verfahren zur Herstellung eines wärmedämmenden Formkörpers aus anorganischem Material und anorganischen Verstärkungsfasern, gekennzeichnet durch folgende Abfolge von Verfahrensschritten:
a) Mischen von 30-70 Gewichtsteilen von geblähtem Vermiculit mit 15-40 Gewichtsteilen eines anorganischen Binders zu einer rieselfähigen Vormischung,
b) Hinzumischen von 15-50 Gewichtsteilen von mikroporösem Material, von 0,5-8 Gewichtsteilen von Verstärkungsfasern und gegebenenfalls von bis zu 20 Gewichtsteilen von Infrarottrübungsmittel zur gemäß a) bereiteten Vormischung, wobei die Verstärkungsfasern, bezogen auf ihr Eigengewicht, höchstens 2 % B₂O₃ und höchstens 2 % Alkalimetalloxide enthalten, und eine Endmischung erhalten wird, in der sich die vermischten Bestandteile zu 100 Gewichtsteilen addieren,
c) Verpressen der Endmischung zu einem wärmedämmenden Formkörper, und
d) Härten und Trocknen des Formkörpers bei Temperaturen bis 1000 °C.

4. Verwendung eines Formkörpers nach Anspruch 1 und Anspruch 2 als Distanzelement in Strahlungsheizkörpern für Kochherde und Backöfen.

## Claims

1. Thermally insulating molded body comprising inorganic material and inorganic reinforcing fibres, characterized by the following, weight-based composition:
a) 30-70% of expanded vermiculite
b) 15-40% of inorganic binders
c) 0-20% of infrared opacifier
d) 15-50% of microporous material
e) 0.5-8% of reinforcing fibres containing not more than 2% of B₂O₃ and not more than 2% of alkali metal oxides, based on the weight of the reinforcing fibres.

2. Molded body according to Claim 1, characterized in that the reinforcing fibres are selected from the group consisting of fibres of silica, fused silica, R-glass, S2-Glass®, ECRGLAS® and any mixtures of these fibres.

3. Process for producing a thermally insulating molded body comprising inorganic material and inorganic reinforcing fibres, characterized by the following sequence of process steps:
a) mixing 30-70 parts by weight of expanded vermiculite with 15-40 parts by weight of an inorganic binder to give a free-flowing premix,
b) mixing 15-50 parts by weight of microporous material, 0.5-8 parts by weight of reinforcing fibres and, if desired, up to 20 parts by weight of infrared opacifier into the premix prepared as described in a), where the reinforcing fibres contain, based on their own weight, not more than 2% of B₂O₃ and not more than 2% of alkali metal oxides and the mixed constituents add up to 100 parts by weight in the final mixture,
c) pressing the final mixture to form a thermally insulating molded body and
d) curing and drying the molded body at temperatures up to 1000°C.

4. Use of a molded body according to Claim 1 and Claim 2 as spacer in radiative heating elements for cooking appliances and ovens.

## Revendications

1. Corps moulé calorifuge en matériau inorganique et en fibres de renforcement inorganiques, caractérisé par la composition suivante, sur base du poids :
a) 30-70% de vermiculite soufflée,
b) 15-40% de liant inorganique,
c) 0-20% d'un opacifiant aux rayons infrarouges,
d) 15-50% de matériau microporeux,
e) 0,5-8% de fibres de renforcement qui contiennent au maximum 2% de B₂O₃ et au maximum 2% d'oxydes de métaux alcalins, sur base du poids des fibres de renforcement.

2. Corps moulé suivant la revendication 1, caractérisé en ce que les fibres de renforcement sont choisies parmi un groupe qui comprend des fibres de silice, de verre de quartz, de verre R, de S2-Glass®, de ECRGLAS® et de mélanges quelconques de ces fibres.

3. Procédé de préparation d'un corps moulé calorifuge en matériau inorganique et en fibres de renforcement inorganiques, caractérisé par la séquence suivante d'étapes de procédé :
a) mélange de 30-70 parties en poids de vermiculite soufflée avec 15-40 parties en poids d'un liant inorganique en un prémélange coulant,
b) mélange de 15-50 parties en poids de matériau microporeux, de 0,5-8 parties en poids de fibres de renforcement et, le cas échéant, de jusqu'à 20 parties en poids d'un opacifiant aux rayons infrarouges avec le prémélange préparé suivant le point a), les fibres de renforcement contenant, sur base de leur propre poids, au maximum 2% de B₂O₃ et au maximum 2% d'oxydes de métaux alcalins, et un mélange final étant obtenu dans lequel les composants mélangés s'additionnent pour atteindre 100 parties en poids,
c) compression du mélange final en un corps moulé calorifuge, et
d) trempe et séchage du corps moulé à des températures allant jusqu'à 1000°C.

4. Utilisation d'un corps moulé suivant la revendication 1 et la revendication 2 comme élément d'écartement dans des corps de chauffe par rayonnement pour cuisinières et fours.
